# EUROPEAN PATENT SPECIFICATION

(11) **EP 2 537 912 B1**
(45) Date of publication and mention of the grant of the patent: **06.08.2014**
(21) Application number: 12172758.0
(22) Date of filing: 20.06.2012
(51) Int. Cl.: C10J 3/30, C10J 3/50, C10B 47/18, C10B 49/04, C10B 51/00, C10B 53/02

(54) **Apparatus and method for the continuous-cycle thermo-chemical decomposition of a biomass**
Vorrichtung und Verfahren zum thermochemischen Abbau von Biomasse in einem fortlaufenden Zyklus
Appareil et procédé pour la décomposition thermochimique à cycle continu d'une biomasse

(30) Priority: 20.06.2011 IT UD20110095
(43) Date of publication of application: 26.12.2012
(73) Proprietor: Della Toffola, Daniele, 33042 Buttrio (UD) (IT); Petracca, Mauro, 33100 Udine (IT)
(72) Inventor: Della Toffola, Daniele, 33042 Buttrio (UD) (IT); Petracca, Mauro, 33100 Udine (IT)
(74) Representative: Petraz, Gilberto Luigi

(56) References cited:
- EP-A1- 1 950 272
- WO-A1-99/61561
- WO-A1-02/057396
- WO-A2-2010/052667
- WO-A2-2011/024145
- NL-A- 8 006 038
- US-A1- 2010 275 514
- US-B1- 6 190 429

## Description

### FIELD OF THE INVENTION

The present invention concerns an apparatus and a method for the continuous-cycle thermo-chemical decomposition of a biomass, able to develop a combustion and produce vegetable carbon, known as biochar. The latter can be used as an amender in the field of agriculture, increasing the fertility of the soil by a percentage on average comprised between about 10% and about 20%.

In particular the present invention is based on the process of pyrolysis or gasification, to produce heat energy with high yields and low emissions of particulate of carbon monoxide and CO₂. It is applied in the domestic and/or industrial field and can be used in boilers or heaters for rooms and/or for cooking foods or other, as well as for the production of biochar.

### BACKGROUND OF THE INVENTION

Pyrolysis is known, that is, the process of physical and chemical decomposition of a biomass such as for example pellets, chip, or wood derivatives in general, which takes place by heating the biomass to temperatures comprised between about 300°C and about 600°C. Pyrolysis decomposes the material of the biomass in two parts: a gassy part and a solid part. The gassy part consists of a flammable mixture of gases and a condensable compound called TAR, while the solid part consists of carbon. The gases deriving from this process are used in pyrolysis devices to feed a combustion, which can also take place in a place situated distant from the biomass, and which in turn contributes to keep the pyrolysis process active.

The process of gasification is also known: this takes place when a biomass is heated to a temperature comprised between about 1000°C and about 1100°C in the presence of oxygen. In this case, as product of the reaction a highly combustible gas is obtained, mainly consisting of hydrogen and carbon monoxide.

A combustion device is known which is based on the pyrolysis or gasification process, having an internal chamber into which the biomass is loaded and above which the so-called "flame cap" is generated. The flame cap is a flame disposed radially which works as a cap and prevents the oxygen in the air situated above the flame from entering into the region below the flame. The internal chamber comprises an aperture, in its upper part, in proximity to which a flame develops and, consuming the oxygen, prevents the oxygen from descending in the direction of the biomass below. The heat of the combustion and the residual gases, descending into the internal chamber in proximity to the biomass, causes the pyrolysis and/or gasification of the latter.

One disadvantage of this known combustion device is that it has a discontinuous function, because the combustion process takes place until the biomass which has been loaded into the chamber is completely consumed by the process of pyrolysis or gasification. When the process terminates, because the biomass is finished, it is necessary to reload the internal chamber and then restart the process by means of a re-ignition step. These operations therefore require the intervention of an operator.

A pyrolysis device is also known which functions continuously, that is, with a continuous and automatic loading of the biomass. This known device has a so-called "closed-chamber" functioning and comprises a pyrolysis chamber which is made inside a long cylindrical steel tube, disposed horizontally and inside which the biomass runs, thrust by suitable means, such as for example a screw. Under the chamber there is a burner suitable to heat the chamber to a temperature suitable to cause the process of pyrolysis. The burner is fed with a part of the gas produced in the chamber. The rest of the gas produced by the pyrolysis process can be used for other purposes, or stored and used later.

This closed-chamber pyrolysis device has the disadvantage, however, that its structure is complex and that it requires a burner separate from the combustion chamber and means to collect the gases produced.

The patent application NL-A-8006038 describes an apparatus for burning excrement and litter, which comprises a feed screw inclined upward to convey the material to be burned toward the top of a combustion chamber, in which the material to be burned is distributed by a distribution screw disposed horizontally. In the lower part of the combustion chamber there is a grid on which the material to be burned is deposited. The combustion chamber, above the grid, is passed through by a plurality of tubes of a heat exchanger of the gas-gas type. The combustion air is forced by a ventilator into an interstice that surrounds the combustion chamber. However, in this apparatus, no pyrolysis or gasification process occurs and in the upper part of the combustion chamber there is no flame which, consuming the oxygen, prevents the latter from descending in the direction of the underlying material to be burned.

The international patent application WO-A-99/61561 describes a gasifier for the production of gas from combustion material fed from below, which provides injectors disposed in the lower part of a combustion chamber to introduce combustion air inside the combustion chamber. The injectors are oriented at an acute angle with respect to the wall of the combustion chamber, so as to impart to the combustion air a rotational motion inside the combustion chamber. In this gasifier too, in the upper part of the combustion chamber no flame is generated which, consuming the oxygen, prevents it from descending in the direction of the combustion material.

One purpose of the present invention is to obtain an apparatus for the continuous-cycle thermo-chemical decomposition of a biomass which produces energy in the form of heat and which can function continuously without requiring the intervention of the user or an operator, which is economical, of limited size and simple to make.

Another purpose of the present invention is to perfect a method for the continuous-cycle thermo-chemical decomposition of a biomass which emits energy in the form of heat and which allows to obtain biochar as a residual product.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, an apparatus for the continuous-cycle thermo-chemical decomposition of a biomass comprises a reaction chamber in which a pyrolysis or gasification process of said biomass is suitable to take place, with the generation of gas, and means to feed the biomass and comburent air, preferably but not necessarily at variable speed.

According to a characteristic feature of the present invention, the apparatus also comprises a first pipe disposed along a first axis passing through the reaction chamber and through which the biomass is suitable to be continuously conveyed toward the reaction chamber, a second pipe, disposed along a second axis, substantially perpendicular to the first axis and connected to the reaction chamber so as to allow the combustion of at least one part of the gases produced by the pyrolysis or gasification.

The apparatus also comprises containing means disposed outside the reaction chamber, substantially at the intersection between said two axes, to define an interstice around the reaction chamber and at least a part of the second pipe, first apertures or passage ways, to put the reaction chamber in communication with the interstice, and second apertures or passage ways to put the inside of the second pipe into communication with the interstice and thus allow to generate a flame cap in the second pipe.

According to another characteristic feature of the present invention, the reaction chamber is defined by a first part of the first pipe.

According to one form of embodiment of the present invention, the first pipe comprises a first cylindrical tubular element, for example made of metal, and the second pipe comprises a second cylindrical tubular element, also for example made of metal, attached to the first cylindrical tubular element in correspondence with the reaction chamber.

According to another characteristic feature of the present invention, the first passage ways comprise a plurality of first through holes made in the lower part of the first cylindrical tubular element.

According to another feature of the present invention, the second passage ways comprise a plurality of second through holes made in the second cylindrical tubular element and disposed radially, which put the interstice in communication with the inside of the second pipe.

According to a variant of the present invention, the second through holes are adjustable in height.

According to another feature of the present invention, the containing means comprise a closed container having a closure shaped like a circular crown, which is located above the second through holes and is passed through by the second cylindrical tubular element. In its lower part, the container comprises an aperture in which ventilation means are disposed, suitable to convey air into the interstice.

According to another feature of the present invention, the feed means comprise a screw, which is suitable to be made to rotate at variable speed and which is disposed inside a second part of the first pipe, upstream of the reaction chamber with respect to a direction of feed of the biomass.

According to another feature of the present invention, the first pipe also comprises a third part, disposed downstream of the reaction chamber with respect to the direction of feed of the biomass. In the third part of the first pipe, closing means are disposed along said first axis in order to adjust the quantity of residual product exiting from the reaction chamber and the subsequent automatic discharge thereof.

According to another feature of the present invention, the apparatus also comprises a third cylindrical tubular element which is attached to the first pipe in the third part, facing downward and is suitable to be partly filled with water in order to extinguish the residual product exiting from the reaction chamber and to prevent the access of air into the latter.

The present invention also concerns a method for an apparatus for the continuous-cycle thermo-chemical decomposition of a biomass, having a reaction chamber in which a process of pyrolysis or gasification of the biomass is suitable to take place.

According to a characteristic feature of the present invention, the biomass is conveyed along a first pipe disposed along a first axis in the reaction chamber, continuously, by feed means. The combustion of gases produced by the pyrolysis or gasification occurs in a second pipe, disposed along a second axis, substantially perpendicular to the first axis and connected to the reaction chamber. The air is conveyed into an interstice to feed the combustion. The interstice is defined by containing means disposed outside the reaction chamber, substantially at the intersection of the two axes, and at least a part of the second pipe.

The present invention also includes the possibility of regulating the production of heat by acting on the speed of the feed screw of the biomass, the speed of flow of the comburent air and the height of the holes of the second passage ways.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of an apparatus for the continuous-cycle thermo-chemical decomposition of a biomass according to the present invention;
- fig. 2 is a schematic section of a detail of the apparatus in fig. 1;
- fig. 3 is another schematic section of a detail of the apparatus in fig. 1;
- fig. 4 is a view from above, partly sectioned, of the apparatus in fig. 2.

### DETAILED DESCRIPTION OF A PREFERENTIAL FORM OF EMBODIMENT

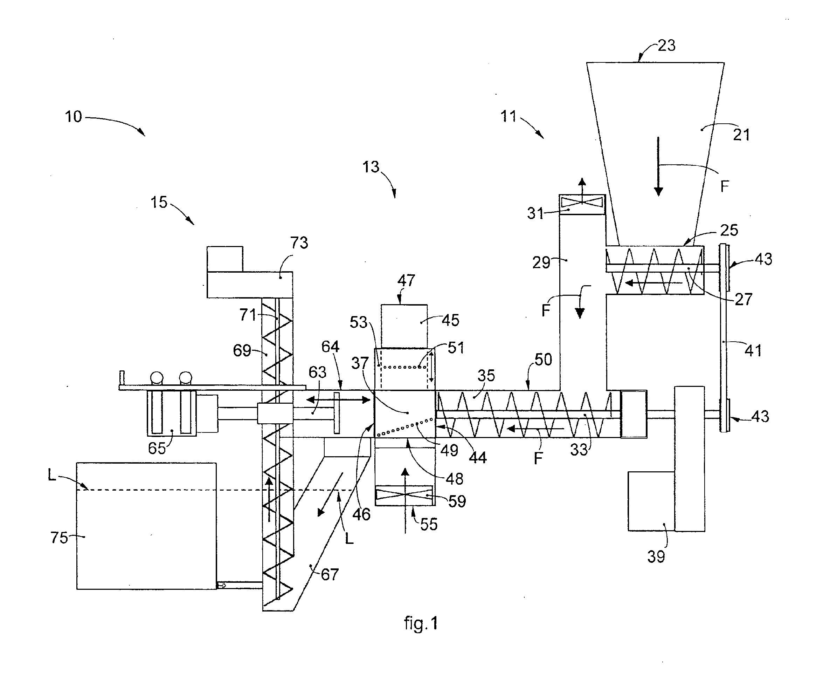

With reference to fig. 1, an apparatus 10 for the continuous-cycle thermo-chemical decomposition of a biomass according to the present invention comprises a loading section 11, suitable to introduce a biomass into a combustion section 13 inside which the pyrolysis of the biomass takes place. The apparatus 10 also comprises a collection section 15 for the biochar, that is, the residues of the pyrolysis consisting substantially of vegetable carbon.

The biomass may consist of pellets, small pieces of pressed wood, chip, other fuels of vegetable origin or other.

The loading section 11 comprises a hopper 21 suitable to contain the biomass to be subjected to the pyrolysis process. In particular, the hopper 21 comprises a first aperture 23, disposed in the upper part and suitable for loading the biomass by the user, and a second aperture 25, disposed in the lower part, under which a first screw 27 is horizontally disposed, which introduces the biomass arriving from the hopper 21 into a vertical connector 29 which at the upper part has a steel valve 31 for the entering or exiting air. At the base of the first vertical connector 29 a second screw 33 is disposed horizontally, inside a first steel pipe 35, having a substantially cylindrical shape. The second screw 33 is suitable to introduce the biomass into a reaction chamber 37 of the combustion section 13. Advantageously, both the first screw 27 and the second screw 33 are commanded by a first motor 39. In particular, the latter is connected directly to the second screw 33 and is connected to the first screw 27 by means of a belt 41 disposed on a pair of pulleys 43.

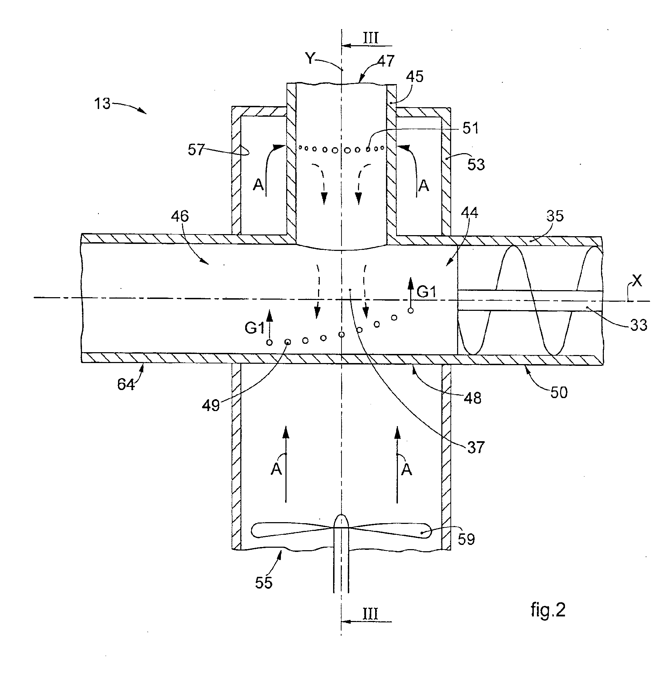

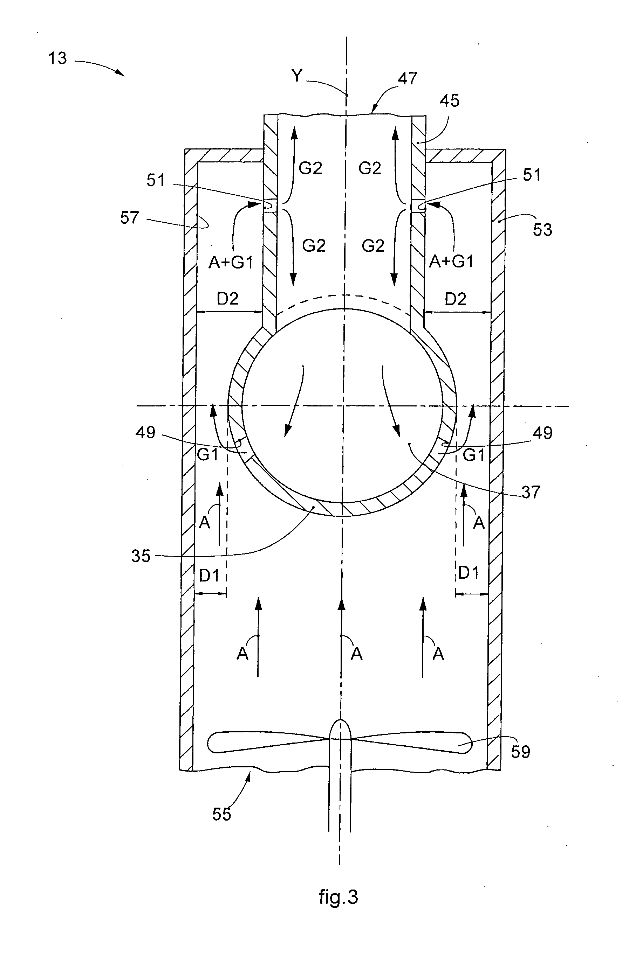

With reference to figs. 2 and 3, the reaction chamber 37 is defined by a first part 48 of the first pipe 35, has an entrance 44 and an exit 46 for the biomasses, respectively communicating with a second part 50 and a third part 64 of the first pipe 35, and is situated at the junction between the first steel cylindrical pipe 35, disposed horizontally along a first axis X, and a second steel cylindrical pipe 45 disposed vertically along a second axis Y, which is attached to the first pipe 35 so as to form an upside-down T, and communicating with the reaction chamber 37. The second pipe 45 has an emission aperture 47 facing upward, through which the heat is expelled, together with the combustion vapors and gases.

The first pipe 35 is provided with a plurality of first passage ways, in this case first through holes 49, made in the lower part. The first holes 49 are disposed along a line inclined with respect to the first axis X.

The second pipe 45 is provided with a plurality of second passage ways, in this case second through holes 51, which are disposed radially and which describe a substantially horizontal line.

Around the reaction chamber 37, in proximity to the intersection between the first pipe 35 and the second pipe 45, containing means are disposed, in this case a metal container 53 which is closed at the upper part around the second pipe 45 and laterally around the first pipe 35. The container 53, which is substantially cylindrical in shape and symmetrical with respect to the second axis Y, has a lower aperture 55 (figs. 2 and 3), and defines an empty interstice 57, with respect to the two pipes 35 and 45.

In proximity to the lower aperture 55 there is a fan 59, advantageously provided with an electric motor, not shown in the drawings.

The first holes 49 are configured for the fluidic communication between the reaction chamber 37 and the interstice 57, while the second holes 51 are configured for the fluidic communication between the inside of the second pipe 45 and the interstice 57.

Again with reference to fig. 1, the collection section 15 comprises a mobile closing mean 63, which is located internally along a third part 64 of the first pipe 35 in proximity to the exit 46 of the combustion chamber. The mobile closing mean 63 is advantageously commanded by a second motor 65 and is mobile horizontally along the first pipe 35 to regulate the exit of ash or biochar from the reaction chamber 37.

In proximity to the exit 46 of the reaction chamber 37 there is an oblique or vertical pipe 67 which is communicating at the upper end with the third part 64 of the first pipe 35, being attached to the lower part of the latter. Furthermore, the oblique pipe 67 communicates, at its lower end, with a recovery pipe 69. Inside this, a third screw 71 is vertically disposed and is commanded by a third motor 73: the third screw 71 is provided to lift and remove the residues of reaction which are deposited at the base of the oblique pipe 67.

Advantageously, the oblique pipe 67 and the recovery pipe 69 are filled with water to a constant level L, in order to extinguish and/or cool the biochar exiting from the reaction chamber 37. The level L of water inside the oblique pipe and the recovery pipe 69 is kept constant by a compensation tank 75.

The apparatus 10 as described heretofore functions as follows.

With reference to fig. 1, a biomass is loaded from the first aperture 23 of the hopper 21, exiting from the second aperture 25, and is then transported by the first screw 27 and the second screw 33 to the reaction chamber 37, in a direction F.

In the reaction chamber 37 the process of pyrolysis and/or gasification of the biomass is started by igniting a spark plug of a known type, not shown in the drawings. The fan 59 (figs. 2 and 3) forces the air A inside the interstice 57.

According to the form of embodiment in fig. 3, the air A passes at the sides of the first pipe 35, in proximity to the first holes 49, which are situated at a first distance D1 from the respective sides of the container 53. As it rises, the air A then passes at the sides of the second pipe 45, in proximity to the second holes 51, which are situated at a second distance D2, greater than the first distance D1, from the respective sides of the container 53. Consequently, the section of the passage of air A in proximity to the first holes 49 is less than the section of the passage of air in proximity to the second holes 51. Consequently, since the stream of air A is constant in the whole of the interstice 57, its speed is higher in proximity to the first holes 49 compared with the speed in proximity to the second holes 51.The pressure inside the interstice 57 is in this case higher in proximity to the second holes 51 compared with the pressure in proximity to the first holes 49. Consequently, through the second holes 51 the air A passes from the interstice 57 inside the second pipe 45 and through the first holes 49 at least part of the gases G produced by the process of pyrolysis /gasification pass from the reaction chamber 37 to the interstice 57.

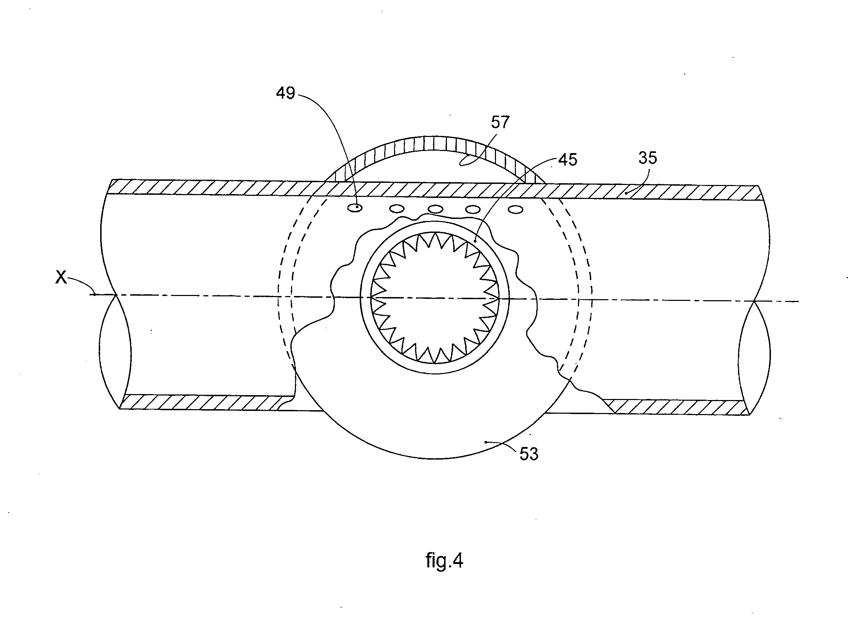

The air A in the interstice 57 is then mixed with the gases G1 and this mixture is introduced into the second pipe 45 through the second holes 51. In proximity to the latter, and inside the second pipe 45, the mixture is combusted (fig. 4). The combustion consumes the oxygen brought by the air A and produces gassy combustion residues G2 at high temperature. Part of the combustion residues G2 are emitted into the atmosphere through the upper emission aperture 47 (fig. 3), the remaining part is instead drawn back through the reaction chamber 37 due to the recall effect described above. In this case, the gassy combustion residues G2, passing into the reaction chamber 37, give up heat to the biomass, causing the pyrolysis and/or gasification thereof, depending on the temperature and quantity of oxygen delivered. The gases G produced by the pyrolysis and/or gasification of the biomass are again used to feed the combustion process in the second pipe 45 as described above. The flame that develops in the second pipe 45 therefore performs the function of a "flame cap", preventing the oxygen in the air situated above the emission aperture 47 from entering into the reaction chamber 37.

According to another form of embodiment of the present invention, the first distance D1 and the second distance D2 are similar, or not very different. Consequently, the pressures in proximity to the second holes 51 and in proximity to the first holes 49 are also similar or not very different, so that the recall effect described above is negligible. In this case, the heat developed by the combustion in proximity to the second holes 51 is sufficient to cause the pyrolysis and/or gasification of the biomass that is in the reaction chamber 37. The gases G1 thus produced ascend from the reaction chamber 37 to the second pipe 45 from the inside, that is, without passing through the interstice 57. In this case the gases G 1 mix with the oxygen entering from the holes 51 and feed the combustion.

In general, the combustion in proximity to the holes 51 is given by the gases G1 coming directly from the combustion chamber 37 through the second pipe 45 and by the gases G 1 coming from the interstice 57.

According to variants of the present invention, the second pipe 45 comprises a mobile section which can be made to slide vertically along the second axis Y in order to raise or lower the row of second holes 51, so as to change the position along the second axis Y of the second holes 51 used to exchange gas, and hence for combustion.

The process of pyrolysis and/or gasification in the reaction chamber 37 can be controlled by acting on the speed of rotation of the second screw 33 which determines directly the speed of transit of the biomasses inside the reaction chamber 37. Furthermore, by increasing the speed of rotation of the fan 59 there is a greater input of oxygen to the combustion. It is possible that, in the presence of an excessive input of air A into the interstice 57, the combustion inside the second pipe 45 does not consume all the oxygen delivered. Consequently, in some forms of embodiment, the gases G2 that are drawn back inside the reaction chamber 37 contain a quantity of oxygen that can contribute to cause the gasification of the biomass when there are high temperatures. The regulation of the speed of rotation of the fan 59 and the speed of the second screw 33 allows to choose the type of reaction that takes place inside the reaction chamber 37: for example, at low rotation speeds of the fan 59 and at low rotation speed of the second screw 33, it is mainly a process of pyrolysis of the biomass that occurs inside the reaction chamber 37; on the contrary, at high rotation speeds of the fan 59 and at low speed of advance of the second screw 33, it is mainly a process of gasification of the biomass that occurs inside the reaction chamber 37.

The gasification of the biomass delivers reaction gases G1 that cause an intense combustion, but does not allow to obtain biochar as residual product. Vice versa, the pyrolysis of the biomass delivers gas G which generates a less intense and more controlled reaction, and as residual product of the reaction vegetable carbon or biochar may be obtained, which can advantageously be used as an amender in the field of agriculture.

The mobile closing mean 63 can be used to force the permanence of the biomass inside the reaction chamber 37 during the start-up of the reaction, preventing the loss of biomass not pyrolised or gasified, or at a later time, to regulate the discharge of the biochar through the oblique pipe 67. Here the biochar is extinguished and/or cooled by the water, and is then collected by the third screw 71, dried and stored.

It is clear that modifications and/or additions of parts may be made to the pyrolytic oven as described heretofore, without departing from the field and scope of the present invention.

It is also clear that, although the present invention has been described with reference to some specific examples, a person of skill in the art shall certainly be able to achieve many other equivalent forms of pyrolytic oven, having the characteristics as set forth in the claims and hence all coming within the field of protection defined thereby.

## Claims

1. Apparatus for the continuous-cycle thermo-chemical decomposition of a biomass, comprising a reaction chamber (37) configured for receiving continuously conveyed biomass and for performing a process of pyrolysis or gasification of said bio-mass, with the input of air (A) from outside the reaction chamber (37), to produce gas (G1), **characterized in that** it also comprises:
- a first pipe (35) disposed horizontally along a first axis (X) passing through said reaction chamber (37) and connected to said reaction chamber (37) to convey said biomass into said reaction chamber (37), wherein a first part (48) of said first pipe (35) defines said reaction chamber (37),
- a feed screw (33) of said biomass, disposed inside a second part (50) of said first pipe (35), upstream of said reaction chamber (37) with respect to a direction (F) of feed of said bio-mass;
- a second pipe (45), disposed vertically along a second axis (Y), substantially perpendicular to said first axis (X), and communicating with an upper part of said reaction chamber (37),
- containing means (53) disposed outside said reaction chamber (37) to define an interstice (57) both around said reaction chamber (37) and around at least a part of said second pipe (45), said interstice (57) being configured for receiving said air (A) suitably conveyed,
- first apertures (49) provided in the wall of said reaction chamber (37) to put the inside of said reaction chamber (37) in communication with said interstice (57),
and
- second apertures (51) provided in the wall of said second pipe (45) configured to put the inside of said second pipe (45) into communication with said interstice (57) and to develop a flame in said second pipe (45) that generates a flame cap in said second pipe (45);
said first pipe (35) also comprising a third part (64) disposed downstream of said reaction chamber (37) with respect to said direction (F) of feed of said bio-mass, closing means (63) being provided in said third part (64) of said first pipe (35), said closing means (63) being configured to regulate the quantity of residual product exiting from said reaction chamber (37);
said apparatus further comprising an auxiliary pipe (67) attached to said third part (64) of said first pipe (35), facing downward and a recovery pipe (69), inside the recovery pipe (69) a screw (71) being provided, configured to lift and remove residues of reaction deposited at the base of the auxiliary pipe (67), wherein the auxiliary pipe (67) and the recovery pipe (69) are configured to be partly filled with water to a constant level (L) in order to cool the residual product exiting from said reaction chamber (37) and to prevent the access of air into said reaction chamber (37) through said third part (64) of said first pipe (35).

2. Apparatus as in claim 1, **characterized in that** said first pipe (35) comprises a first cylindrical tubular element **and in that** said second pipe (45) comprises a second cylindrical tubular element which is attached substantially perpendicular to said first cylindrical tubular element in correspondence and in communication with said reaction chamber (37).

3. Apparatus as in claim 2, **characterized in that** said first apertures comprise a plurality of first through holes (49) made radially in the lower part of said first cylindrical tubular element.

4. Apparatus as in claim 2 or 3, **characterized in that** said second apertures comprise a plurality of second through holes (51) made radially in the wall of said second pipe (45).

5. Apparatus as in any claim hereinbefore, **characterized in that** said containing means comprise a container (53), substantially cylindrical, coaxial to said second pipe (45), closed in the upper part and having a lower aperture (55), ventilation means (59) being provided and configured for suitably forcing said air (A) through said lower aperture (55) into said interstice (57).

6. Apparatus as in any claims hereinbefore, **characterized in that** it also comprises a loading section (11) having a hopper (21) configured to contain said biomass, and introduction means (27) configured to introduce the biomass arriving from said hopper (21) into a vertical connector (29) communicating with said feed screw (33).

7. Apparatus as in claim 6, **characterized in that** said introduction means comprises a horizontal screw (27).

8. Apparatus as in claim 6 or 7, **characterized in that** the vertical connector (29) is provided at the upper part with a steel valve (31) for the entering or exiting air.

9. Apparatus as in claim 6, 7 or 8, **characterized in that** it comprises a first motor (39) provided to command both the screw (27) and the feed screw (33).

10. Apparatus as in claim 9, **characterized in that** the first motor (39) is connected directly to the feed screw (33) and is connected to the screw (27) by means of a belt (41) disposed on a pair of pulleys (43).

11. Apparatus as in any claims hereinbefore, **characterized in that** a second motor (65) is provided to command said closing means (63).

12. Apparatus as in any claims hereinbefore, **characterized in that** a third motor (73) is provided to command the screw (71) inside the recovery pipe (69).

13. Apparatus as in any claims hereinbefore, **characterized in that** a compensation tank (75) is provided to keep constant the level (L) of water inside the auxiliary pipe (67) and the recovery pipe (69).

14. Apparatus as in any claims hereinbefore, **characterized in that** the second pipe (45) comprises a mobile section configured to slide vertically along the second axis (Y) in order to raise or lower the row of second apertures (51) and change the position along the second axis (Y) of the apertures (51).

15. Method for the continuous-cycle thermo-chemical decomposition of a biomass, by means of an apparatus (10) having a reaction chamber (37) inside which said biomass is suitable to be continuously conveyed in order to produce gas (G1) by a process of pyrolysis or gasification of said bio-mass, with the input of air (A) arriving from outside said reaction chamber (37), **characterized in that** it comprises:
- a first step in which said biomass is conveyed continuously, by a feed screw (33) provided upstream the reaction chamber (37) with respect to a direction (F) of feed, along a first pipe (35) disposed horizontally along a first axis (X) passing through said reaction chamber (37) and connected to said reaction chamber (37), wherein said reaction chamber (37) is defined by a first part (48) of said first pipe (35),
- a second step in which the combustion of the gases (G1) produced by said pyrolysis or by said gasification in said reaction chamber (37) takes place in a second pipe (45), disposed vertically along a second axis (Y), substantially perpendicular to said first axis (X) and communicating with said reaction chamber (37), due to the presence both of containing means (53) disposed outside said reaction chamber (37), which define around said reaction chamber (37) and around at least a part of said second pipe (45) an interstice (57) into which said air (A) is conveyed, and also due to the presence of first apertures (49) provided in the wall of said reaction chamber (37) which put the inside of said reaction chamber (37) in communication with said interstice (57), and also of second apertures (51) provided in the wall of said second pipe (45) which put the inside of said second pipe (45) into communication with said interstice (57), said gases (G1) passing from said reaction chamber (37) to said interstice (57) through said first apertures (49), and said air (A), possibly mixed with said gases (G1), passing from said interstice (57) to said second pipe (45) through said second apertures (51), feeding said combustion and developing a flame in said second pipe (45) that generates a flame cap in said second pipe (45),
the method providing to regulate the quantity of residual product exiting from said reaction chamber (37) by closing means (63) disposed downstream of said reaction chamber (37) with respect to said direction (F) of feed of said bio-mass, the method further providing to cool the residual product exiting from said reaction chamber (37) and to prevent the access of air into said reaction chamber (37) through said first pipe (35) by filling with water to a constant level (L) an auxiliary pipe (67) attached to said first pipe (35), facing downward and a recovery pipe (69) inside which a screw (71) lifts and removes residues of reaction deposited at the base of the auxiliary pipe (67).

## Patentansprüche

1. Vorrichtung für den im Dauerbetrieb thermochemischen Abbau einer Biomasse, aufweisend eine Reaktionskammer (37) konfiguriert für das Aufnehmen von kontinuierlich geförderter Biomasse und für die Ausführung eines Pyrolyse- oder Vergasungsprozesses der Biomasse, mit einer Zufuhr von Luft (A) von außerhalb der Reaktionskammer (37), zur Erzeugung von Gas (G1), **dadurch gekennzeichnet, dass** sie ferner aufweist:
- ein erstes Rohr (35), horizontal angeordnet entlang einer ersten Achse (X), die durch die Reaktionskammer (37) läuft, und verbunden mit der Reaktionskammer (37), um die Biomasse in die Reaktionskammer (37) zu fördern, wobei ein erster Teil (48) des ersten Rohrs (35) die Reaktionskammer (37) definiert,
- einen Schneckenförderer (33) für die Biomasse, angeordnet innerhalb eines zweiten Teils (50) des ersten Rohrs (35), hinsichtlich der Förderungsrichtung (F) der Biomasse stromaufwärts der Reaktionskammer (37);
- ein zweites Rohr (45), vertikal angeordnet entlang einer zweiten Achse (Y) im Wesentlichen senkrecht zu der ersten Achse (X) und in Verbindung mit einem oberen Teil der Reaktionskammer (37),
- Aufbewahrungsmittel (53) außerhalb der Reaktionskammer (37), die einen Zwischenraum (57) sowohl um die Reaktionskammer als auch um zumindest einen Teil des zweiten Rohrs (45) definieren, wobei der Zwischenraum (57) konfiguriert ist für das Aufnehmen der entsprechend geförderten Luft (A),
- erste Öffnungen (49), in der Wand der Reaktionskammer (37) bereitgestellt, zur Verbindung des Innenraums der Reaktionskammer (37) mit dem Zwischenraum (57),
und
- zweite Öffnungen (51), in der Wand des zweiten Rohrs (45) bereitgestellt, konfiguriert für die Verbindung des Innenraums des zweiten Rohrs (45) mit dem Zwischenraum (57) und zur Bildung einer Flamme im zweiten Rohr (45), die eine Flammenhaube im zweiten Rohr (45) erzeugt;
das erste Rohr (35) ferner aufweisend ein drittes Teil (64), hinsichtlich der Förderungsrichtung (F) der Biomasse stromabwärts der Reaktionskammer (37) angeordnet, wobei ein Verschlussmittel (63) im dritten Teil (64) des ersten Rohrs (35) bereitgestellt ist, wobei das Verschlussmittel (63) konfiguriert ist zum Regulieren der Menge des Restprodukts, das die Reaktionskammer (37) verlässt;
die Vorrichtung ferner aufweisend ein Unterstützungsrohr (67) befestigt am dritten Teil (64) des ersten Rohrs (35), nach unten gerichtet, und ein Rückgewinnungsrohr (69) mit einer innerhalb des Rückgewinnungsrohrs (69) bereitgestellten Schraube (71), konfiguriert zum Heben und zur Entfernung der an der Basis des Unterstützungsrohrs (67) abgelagerten Reaktionsrückstände, wobei das Unterstützungsrohr (67) und das Rückgewinnungsrohr (69) konfiguriert sind, um teilweise bis zu einem konstanten Niveau (L) mit Wasser gefüllt zu sein, um die Produktrückstände, die die Reaktionskammer (37) verlassen, zu kühlen, und um die Luftzufuhr in die Reaktionskammer (37) durch den dritten Teil (64) des ersten Rohrs (35) verhindern.

2. Vorrichtung nach Anspruch 1, **dadurch gekennzeichnet, dass** das erste Rohr (35) ein erstes zylindrisches rohrförmiges Element aufweist und dass das zweite Rohr (45) ein zweites zylindrisches rohrförmiges Element aufweist, das im Wesentlichen senkrecht zu dem ersten zylindrischen rohrförmigen Element in Übereinstimmung und Verbindung mit der Reaktionskammer (37) befestigt ist.

3. Vorrichtung nach Anspruch 2, **dadurch gekennzeichnet, dass** die ersten Öffnungen eine Vielzahl erster Durchgangsbohrungen (49) aufweist, die radial im unteren Teil des ersten zylindrischen rohrförmigen Element gemacht sind.

4. Vorrichtung nach Anspruch 2 oder 3, **dadurch gekennzeichnet, dass** die zweiten Öffnungen eine Vielzahl zweiter Durchgangsbohrungen (51) aufweist, die radial in der Wand des zweiten Rohrs (45) gemacht sind.

5. Vorrichtung nach einem der vorherigen Ansprüche, **dadurch gekennzeichnet, dass** die Aufbewahrungsmittel einen Behälter (53) aufweisen, im Wesentlichen zylindrisch, der koaxial zum zweiten Rohr (45) ist, der im oberen Teil geschlossen ist und eine untere C7ffnung (55) hat, wobei ein Mittel zur Belüftung bereitstellt und konfiguriert ist, um entsprechend die Luft (A) durch die untere Öffnung in den Zwischenraum (57) zu führen.

6. Vorrichtung nach einem der vorherigen Ansprüche, **dadurch gekennzeichnet, dass** sie auch einen Beladungsbereich (11) mit einem Trichter (21) aufweist, konfiguriert für das Aufnehmen der Biomasse, und Einführungsmittel (27), konfiguriert für die Einführung der aus dem Trichter (21) eintreffenden Biomasse in eine vertikale Verbindung, die mit dem Schneckenförderer (33) verbunden ist.

7. Vorrichtung nach Anspruch 6, **dadurch gekennzeichnet, dass** das Einführungsmittel eine horizontale Schraube (27) aufweist.

8. Vorrichtung nach Anspruch 6 oder 7, **dadurch gekennzeichnet, dass** die vertikale Verbindung (29) mit einer stählernen Klappe (31) für die eingehende und hinausgehende Luft im oberen Teil versehen ist.

9. Vorrichtung nach Anspruch 6, 7, oder 8, **dadurch gekennzeichnet, dass** sie einen ersten Motor (39) aufweist, bereitgestellt um sowohl die Schraube (27) als auch den Schneckenförderer (33) zu steuern.

10. Vorrichtung nach Anspruch 9, **dadurch gekennzeichnet, dass** der erste Motor (39) direkt mit dem Schneckenförderer (33) verbunden ist und mit der Schraube (27) mittels eines auf einem Paar von Rollen (43) angeordneten Bandes (41) verbunden ist.

11. Vorrichtung nach einem der vorherigen Ansprüche, **dadurch gekennzeichnet, dass** ein zweiter Motor (65) bereitgestellt ist, um das Schließungsmittel (63) zu steuern.

12. Vorrichtung nach einem der vorherigen Ansprüche, **dadurch gekennzeichnet, dass** ein dritter Motor bereitgestellt ist, um die Schraube (71) innerhalb des Rückgewinnungsrohrs (69) zu steuern.

13. Vorrichtung nach einem der vorherigen Ansprüche, **dadurch gekennzeichnet, dass** ein Ausgleichsbehälter (75) bereitgestellt ist, um ein konstantes Wasserniveau (L) im Unterstützungsrohr (67) und im Rückgewinnungsrohr (69) zu halten.

14. Vorrichtung nach einem der vorherigen Ansprüche, **dadurch gekennzeichnet, dass** das zweite Rohr (45) einen mobilen Bereich aufweist, der konfiguriert ist, sich vertikal entlang der zweiten Achse (Y) zu verschieben und damit die Reihe der zweiten Öffnungen (51) zu heben oder zu senken und die Position der Öffnungen (51) entlang der zweiten Achse (Y) zu ändern.

15. Verfahren für den im Dauerbetrieb thermochemischen Abbau einer Biomasse mittels einer Vorrichtung (10), aufweisend eine Reaktionskammer (37), die konfiguriert ist für das Aufnehmen von kontinuierlich geförderter Biomasse, um Gas (G1) zu erzeugen mittels eines Pyrolyse- oder Vergasungsprozesses der Biomasse, mit einer Zufuhr von Luft (A) von außerhalb der Reaktionskammer (37), **dadurch gekennzeichnet, dass** es aufweist:
- einen ersten Schritt, in dem die Biomasse kontinuierlich gefördert wird mittels eines Schneckenförderers (33), der hinsichtlich der Förderungsrichtung (F) stromaufwärts der Reaktionskammer (37) angeordnet ist, entlang eines ersten Rohrs (35), das horizontal angeordnet ist entlang einer ersten Achse (X), die durch die Reaktionskammer (37) läuft, und verbunden ist mit der Reaktionskammer (37), wobei die Reaktionskammer (37) durch einen ersten Teil (48) des ersten Rohrs (35) definiert ist,
- einen zweiten Schritt, in dem die Verbrennung der durch die Pyrolyse oder Vergasung in der Reaktionskammer (37) erzeugten Gase (G1) stattfindet in einem zweiten Rohr (45), das vertikal angeordnet ist entlang einer zweiten Achse (Y), im Wesentlichen senkrecht zu der ersten Achse (X), und in Verbindung mit der Reaktionskammer (37) steht, sowohl aufgrund von Aufbewahrungsmitteln (53), angeordnet außerhalb der Reaktionskammer (37), die um die Reaktionskammer (37) und um zumindest einen Teil des zweiten Rohrs (45) einen Zwischenraum (57) bilden, in den die Luft (A) geführt wird, als auch aufgrund von in der Wand der Reaktionskammer (37) bereitgestellten ersten Öffnungen (49), die den Innenraum der Reaktionskammer (37) mit dem Zwischenraum (57) verbinden, und ferner aufgrund von in der Wand des zweiten Rohrs (45) bereitgestellten zweiten Öffnungen (49), die den Innenraum des zweiten Rohrs (45) mit dem Zwischenraum (57) verbinden, wobei die Gase (G1) aus der Reaktionskammer (37) durch die ersten Öffnungen (49) in den Zwischenraum (37) fließen und die Luft (A), gegebenenfalls gemischt mit den Gasen (G1), aus dem Zwischenraum durch die zweiten Öffnungen (51) in das zweite Rohr (45) fließt, die Verbrennung speisend und eine Flamme bildend im zweiten Rohr (45), die eine Flammenhaube im zweiten Rohr (45) erzeugt, wobei das Verfahren vorsieht, die Menge der Produktionsrückstände, die die Reaktionskammer (37) verlassen, zu regulieren mittels eines Verschlussmittels (63), hinsichtlich der Förderungsrichtung (F) der Biomasse stromabwärts der Reaktionskammer (37) angeordnet,
wobei das Verfahren ferner vorsieht, die Produktionsrückstände, die die Reaktionskammer (37) verlassen, zu kühlen und die Luftzufuhr durch das erste Rohr (35) in die Reaktionskammer (37) zu verhindern durch das Auffüllen mit Wasser bis zu einem konstanten Niveau (L) eines am ersten Rohr (35) befestigten und nach unten gerichteten Unterstützungsrohrs (67) und eines Rückgewinnungsrohrs (69), in dem eine Schraube (71) die an der Basis des Unterstützungsrohrs (67) abgelagerten Reaktionsrückstände hebt und entfernt.

## Revendications

1. Appareil pour la décomposition thermochimique à cycle continu d'une biomasse, comprenant une chambre de réaction (37) configurée pour recevoir de la biomasse convoyé en continu et pour conduire un procédé de pyrolyse ou de gazéification de ladite biomasse, par adduction d'air (A) de l'extérieur de la chambre de réaction (37), **caractérisé en ce qu'**il comprend par ailleurs
- un premier tuyau (35) orienté horizontalement le long d'un premier axe (X) passant à travers ladite chambre de réaction (37) et raccordé à ladite chambre de réaction (37) pour convoyer ladite biomasse à l'intérieur de ladite chambre de réaction (37), une première partie (48) dudit tuyau (35) définissant ladite chambre de réaction (37),
- une vis d'alimentation (33) de ladite biomasse, disposée à l'intérieur d'une deuxième partie (50) dudit premier tuyau (35) en amont de ladite chambre de réaction (37) par rapport à une direction (F) d'alimentation de ladite biomasse;
- un second tuyau (45) disposé verticalement le long d'un second axe (Y), essentiellement perpendiculaire audit premier axe (X), et en communication avec une partie haute de ladite chambre de réaction (37);
- moyens conteneurs (52) disposés à l'extérieur de ladite chambre de réaction (37) pour définir un interstice (57) autour de ladite chambre de réaction (37), aussi bien qu'autour d'au moins une partie dudit second tuyau (45), ledit interstice (57) étant configuré pour recevoir ledit air (A) convenablement convoyé,
- premières ouvertures (49) prévues dans la paroi de ladite chambre de réaction (37) pour mettre l'intérieur de ladite chambre de réaction (37) en communication avec ledit interstice (57), et
- secondes ouvertures (51) prévues dans la paroi dudit second tuyau (45), configurées pour mettre l'intérieur dudit second tuyau (45) en communication avec ledit interstice (57) et pour initier une flamme dans ledit second tuyau (45) qui forme un front de flamme dans ledit second tuyau (45) ;
ledit premier tuyau (35) comprenant également une troisième partie (64) disposée en aval de ladite chambre de réaction (37) par rapport à ladite direction (F) d'alimentation de ladite biomasse, des moyens de fermeture étant prévus dans ladite troisième partie (64) dudit premier tuyau (35), lesdits moyens de fermeture (63) étant configurés pour régler la quantité de produit résiduel sortant de ladite chambre de réaction (37);
ledit appareil comprenant également un tuyau auxiliaire (67) fixé à ladite troisième partie (64) dudit premier tuyau (35), tourné vers le bas, et un tuyau de récupération (69), une vis étant prévue à l'intérieur du tuyau de récupération, pour soulever et éliminer les résidus de réaction déposés à la base du tuyau auxiliaire (67), le tuyau auxiliaire (67) et le tuyau de récupération (69) étant configurés pour être partiellement remplis d'eau jusqu'à un niveau constant (L), pour refroidir le produit résiduel sortant de ladite chambre de réaction (37) et pour empêcher l'entrée d'air dans ladite chambre de réaction (37) à travers ladite troisième partie (64) dudit premier tuyau (35).

2. Appareil selon la revendication 1, **caractérisé en ce que** ledit premier tuyau (35) comprend un premier élément tubulaire cylindrique et **en ce que** ledit second tuyau (45) comprend un second élément tubulaire cylindrique, qui est fixé essentiellement perpendiculairement audit premier élément tubulaire cylindrique en correspondance et en communication avec ladite chambre de réaction (37).

3. Appareil selon la revendication 3, **caractérisé en ce que** lesdites premières ouvertures comprennent une pluralité de premiers trous débouchants (49) pratiqués radialement dans la partie basse dudit élément tubulaire cylindrique.

4. Appareil selon la revendication 3, **caractérisé en ce que** lesdites secondes ouvertures comprennent une pluralité de seconds trous débouchants (51) pratiqués radialement dans la paroi dudit second tuyau (45).

5. Appareil selon n'importe quelle revendication précédentes, **caractérisé en ce que** lesdits moyens conteneurs comprennent un conteneur (53), essentiellement cylindrique, coaxial avec ledit second tuyau (45), fermé en haut et pourvu d'une ouverture inférieure (55), des moyens de ventilation (59) étant prévus et configurés pour forcer convenablement ledit air (A) à travers ladite ouverture inférieure (55), jusqu'à l'intérieur dudit interstice (57).

6. Appareil selon n'importe quelle revendication précédente, **caractérisé en ce qu'**il comprend également une section de chargement (11) avec une trémie (21) configurée pour contenir ladite biomasse, et des moyens d'introduction (27) configurés pour introduire la biomasse provenant de ladite trémie (21) dans un raccord vertical (29) en communication avec ladite vis d'alimentation (33).

7. Appareil selon la revendication 6, **caractérisé en ce que** lesdits moyens d'introduction comprennent une vis horizontale (27).

8. Appareil selon la revendication 6 ou 7, **caractérisé en ce que** le raccord vertical (29) est pourvu en haut d'une soupape en acier (31) pour l'air en entrée ou en sortie.

9. Appareil selon la revendication 6, 7, ou 8, **caractérisé en ce qu'**il comprend un premier moteur (39), prévu pour commander la vis (27) et la vis d'alimentation (33).

10. Appareil selon la revendication 9, **caractérisé en ce que** le premier moteur (39) est relié directement à la vis d'alimentation (33) et à la vis (27) au moyen d'une courroie (41) placée sur une paire de poulies (43).

11. Appareil selon n'importe quelle revendication précédente, **caractérisé en ce qu'**un deuxième moteur (65) est prévu, pour commander lesdits moyens de fermeture.

12. Appareil selon n'importe quelle revendication précédente, **caractérisé en ce qu'**un troisième moteur (73) est prévu, pour commander la vis (71) à l'intérieur du tuyau de récupération (69).

13. Appareil selon n'importe quelle revendication précédente, **caractérisé en ce qu'**un troisième moteur (75) est prévu, pour commander la vis (71) à l'intérieur du tuyau de récupération (69).

14. Appareil selon n'importe quelle revendication précédente, **caractérisé en ce que** le second tuyau (45) comprend une section mobile configurée pour coulisser verticalement le long du second axe (Y) de manière à soulever ou baisser la rangée de secondes ouvertures (51) et changer la position des ouvertures (51) le long du second axe (Y).

15. Procédé pour la décomposition thermochimique à cycle continu d'une biomasse au moyen d'un appareil (10) comportant une chambre de réaction (37) à l'intérieur de laquelle est apte à être convoyée en continu ladite biomasse pour produire un gas (G1) à travers la pyrolyse ou la gazéification de ladite biomasse, par adduction d'air (A) de l'extérieur de ladite chambre de réaction (37), **caractérisé en ce qu'**il comprend:
- une première étape dans laquelle ladite biomasse et convoyée en continu par une vis d'alimentation (33) prévue en amont de la chambre de réaction (37) par rapport à une direction (F) d'alimentation, le long d'un premier tuyau (35) orienté horizontalement le long d'un premier axe (X) passant à travers ladite chambre de réaction (37) et raccordé à ladite chambre de réaction (37), ladite chambre de réaction (37) étant définie par une première partie (48) dudit premier tuyau (35),
- une deuxième étape dans laquelle la combustion des gaz (G1) produits par ladite pyrolyse ou ladite gazéification dans ladite chambre de réaction (37) a lieu dans un second tuyau (45) orienté le long d'un second axe (Y), essentiellement perpendiculaire audit premier axe (X) et en communication avec ladite chambre de réaction (37), grâce à la présence de moyens conteneurs (53) disposés à l'extérieur de ladite chambre de réaction (37) et définissant, autour de ladite chambre de réaction (37) et autour d'au moins une partie dudit second tuyau (45), un interstice (57) dans lequel est convoyé ledit air (A), aussi bien que grâce à la présence de premières ouvertures (49) prévues dans la paroi de ladite chambre de réaction (37), qui mettent l'intérieur de ladite chambre de réaction (37) en communication avec ledit interstice (57), et aussi de secondes ouvertures (51) prévues dans la paroi dudit second tuyau (45), qui mettent l'intérieur dudit second tuyau (45) en communication avec ledit interstice (57), lesdits gaz (G1) passant de ladite chambre de réaction (37) audit interstice (57) à travers lesdites premières ouvertures (49), et ledit air (A), éventuellement mélangé avec lesdits gaz (G1) passant dudit interstice (57) audit second tuyau (45) à travers lesdites secondes ouvertures (51) alimentant ladite combustion et initiant une flamme dans ledit second tuyau (45) qui forme un front de flamme dans ledit second tuyau (45),
le procédé comportant le réglage de la quantité de produit résiduel sortant de ladite chambre de réaction (37) par des moyens de fermeture (63) placés en aval de ladite chambre de réaction (37) par rapport à ladite direction (F) d'alimentation de ladite biomasse,
le procédé comportant également le refroidissement du produit résiduel sortant de ladite chambre de réaction (37) et l'arrêt du passage d'air dans ladite chambre de réaction (37) à travers ledit premier tuyau (35) par introduction d'eau jusqu'à un niveau constant (L) dans un tuyau auxiliaire (67) fixé audit premier tuyau (35), tourné vers le bas, et dans un tuyau de récupération (69) à l'intérieur duquel une vis (71) soulève et élimine les résidus de réaction déposés à la base du tuyau auxiliaire (67).
